# EUROPEAN PATENT APPLICATION

(11) **EP 3 110 011 A1**
(43) Date of publication of application: **28.12.2016**
(21) Application number: 15173229.4
(22) Date of filing: 23.06.2015
(51) Int. Cl.: H04B 1/00, H04B 1/30

(54) **A DIRECT DELTA-SIGMA RECEIVER**

(71) Applicant: Nokia Technologies Oy, 02610 Espoo (FI)
(72) Inventor: Östman, Kim Bertel, 00530 Helsinki (FI)
(74) Representative: Nokia Corporation

(57) **Abstract**

The invention relates to a 6-phase direct delta-sigma receiver comprising a forward signal path comprising a first and second integrator stage, wherein signal paths of both stages are divided into three signal paths. Each path of the first integrator stage comprises an N-path filter mixer, wherein inputs of the N-path filter mixer and an RF transconductance amplifier (Gm) of the second integrator stage are connected to an RF signal input. Each path of the second integrator stage comprises a downconversion mixer connected to the output of the Gm, at least one baseband amplifier stage connected to the output of the downconversion mixer, and a quantizer connected to the output of said at least one baseband amplifier stage. The downconversion mixer is arranged to downconvert an RF signal to a baseband signal and the quantizer is arranged to produce a digital version of the forward signal path output. The invention further relates to a method of filtering an RF signal using a direct delta-sigma receiver.

## Description

### Technological Field

Embodiments of the present invention relate to an apparatus and/or a method for radio frequency receiver systems.

### Background

Recently data traffic has been growing rapidly in wireless communication networks and systems. The increasing interest in wireless technologies and their widespread use in wireless communications have prompted an ever increasing demand for radio frequency (RF) transceivers and receivers. Further, the growing number of wireless communication standards has resulted in the existence of a great variety of Radio Frequency (RF) bands and modes and to be competitive, a mobile receiver should support as many of these standards with different RF bands and/or modes as possible. This kind of multi-supportive receiver enables a versatile use of the wireless mobile receiver in a wide range of environments and frequencies. When implemented with a single wideband receiver chain, this type of multi-supportive receiver has the challenge of processing signals also around the harmonic frequencies of the desired input signal. RF integrated circuits in CMOS technology are gaining increasing popularity in the commercial world, and CMOS technology has become the dominant technology for applications such as GPS receivers, GSM cellular transceivers, wireless LAN, and wireless short-range personal area networks. They are thus the desired technology for implementing multi-supportive receivers.

### Summary

According to various, but not necessarily all, embodiments of the invention there is provided an apparatus that comprises a forward signal path comprising a first integrator stage and a second integrator stage. The signal paths of the first integrator stage and the second integrator stage are both divided into three parallel signal paths. Each signal path of the first integrator stage comprises an N-path filter mixer. Inputs of the N-path filter mixer and an RF transconductance amplifier (Gm) of the second integrator stage are connected to an RF signal input. Further each signal path of the second integrator stage comprises a downconversion mixer that is connected to the output of the RF transconductance amplifier (Gm), at least one baseband amplifier stage connected to the output of the downconversion mixer, and a quantizer connected to the output of said at least one baseband amplifier stage. The downconversion mixer is arranged to downconvert an RF signal to a baseband signal and the quantizer is arranged to produce a digital version of the forward signal path output.

The apparatus may further comprise a feedback signal path comprising three signal paths, each comprising a first digital-to-analog converter connected between the forward signal path output and the first integrator stage providing an upconverted signal to the RF signal input, and a second digital-to-analog converter connected between the forward signal path output and the baseband amplifier stage.

The apparatus may further comprise a signal generator configured to produce a differential clock signal. Mixers of a first signal path of the first and second integrator stages use phases of a first clock signal that is different than phases of a second clock signal used by mixers of a second signal path of the first integrator stage and the second integrator stage and phases of a third clock signal used by mixers of a third signal path of the first integrator stage and the second integrator stage.

The produced clock signal may be a differential 6-phase clock signal with a 60 degree phase shift. However, as well known to the man skilled in the art, the phase shift may not be exactly 60 degree; it may be substantially 60 degrees, for example, in the range of 55 to 65 degrees.

The first clock signal may comprise phases 0 and 180 degrees of the differential clock signal, the second clock signal may comprise phases 60 and 240 degrees of the differential clock signal and the third clock signal may comprise phases 120 and 300 degrees of the differential clock signal. However, as mentioned above, the phase shift may not be exactly 60 degree; it may be substantially 60 degrees, for example, in the range of 55 to 65 degrees. Therefore, the first clock signal may comprise phases 355 to 5 and 175 to 185 degrees of the differential clock signal, the second clock signal may comprise phases substantially 55 to 65 and 235 to 245 degrees of the differential clock signal and the third clock signal may comprise phases substantially 115 to 120 and 295 to 305 degrees of the differential clock signal.

The apparatus may further comprise a combiner configured to combine the quantized low-pass signals with gain coefficients.

The apparatus may be programmable so that one signal path of the first integrator stage and one signal path of the second integrator stage are configured to be switched off, when three signal paths are active, or on, when two signal paths are active

The combiner may be a Digital Signal Processing (DSP) combiner.

A RF signal input of the apparatus may be provided by an LNA.

The apparatus may further comprise an antenna for receiving radio frequency signals.

The apparatus may be a wireless communication apparatus.

Further, according to various, but not necessarily all, embodiments of the invention there is provided a method of filtering an RF signal using a direct delta-sigma receiver. The direct delta-sigma receiver comprises a first integrator stage and a second integrator stage, wherein a signal path of the first and the second integrator stages are each divided into three signal paths. Further a quantizer is arranged at each output signal path of the second integrator stage. The method comprises integrating the RF signal in the first and the second integrator stages, quantizing the output signal of the second integrator stage and providing a differential 6-phase clock signal with substantially or exactly a 60 degree phase shift for mixers of the first integrator stage and the second integrator stage.

The method may further comprise combining the quantized signals with gain coefficients by a combiner for providing digital output signal of the direct delta-sigma receiver.

The method may further comprise digital-to-analog converting of quantized signals before feeding the digital-to-analog converted signals to the first and second integrator stages.

Mixers of the first signal path of the first integrator stage and the second integrator stage may use a first clock signal comprising phases 0 and 180 degrees of the differential clock signal, mixers of the second signal path of the first integrator stage and the second integrator stage may use a second clock signal comprising phases 60 and 240 degrees of the differential clock signal and mixers of the third signal path of the first integrator stage and the second integrator stage may use a third clock signal comprising phases 120 and 300 degrees of the differential clock signal.

The method may further comprise switching off one signal path of the first integrator stage and one signal path of the second integrator stage, when three signal paths of the DDSR are active, or switching on one signal path of the first integrator stage and one signal path of the second integrator stage, when two signal paths of the DDSR are active, when the DDSR is programmable.

The method may further comprise driving the RF signal input node of the apparatus by an LNA.

### Brief Description of the Drawings

In the following, various embodiments of the invention will be described in more detail with reference to the appended drawings, in which
- Fig. 1: shows an example of a diagram of a direct delta-sigma receiver (DDSR) according to an example embodiment;
- Fig. 2: shows an example of a signal transfer function (STF) response of a 6-phase harmonic-reject DDSR according to an example embodiment and an STF response of a 4-phase prior art DDSR, both for f_{CLK} = 1.0 GHz;
- Fig. 3: shows an intermediate voltage gain response at an LNA output node according to an example embodiment;
- Fig. 4: shows a continuous-time approximation of a noise transfer function (NTF) of a 6-phase direct delta-sigma receiver according to an example embodiment;
- Fig. 5: shows an example of the third harmonic rejection property of a 6-phase direct delta-sigma receiver according to an example embodiment for f_{CLK} = 1.0 GHz, comparing it to the prior art;
- Fig. 6: shows an example of the third harmonic rejection property of a 6-phase direct delta-sigma receiver according to an example embodiment, and;
- Fig 7: depicts a method according to an example embodiment.

### Description of Example Embodiments

A mobile receiver supporting as many radio frequency (RF) standards with different RF bands and/or modes as possible is enabled using a multi-supportive, in other words a multimode and/or multiband receiver, in a wide range of environments, systems and solutions.

One traditional solution to achieve this kind of multi-supportive receiver is to implement many parallel receiver chains, so that each receiver chain is dedicated to one RF band and one RF mode. This may, however, lead to a complex and expensive implementation.

An alternative solution is to introduce wideband operation and significant programmability in one or only a few receiver chains. This is a certain kind of move towards a digital-intensive receiver operation and a software-defined RF receiver, wherein digital features provide easier programmability than a traditional fully analog receiver. Inherent wideband operation with passive mixers in the radio-frequency integrated circuit (RFIC) implies that magnitude and spectral content at the harmonics of a desired signal may also enter the signal path. In this manner, they become indistinguishable from the desired signal.

Recent analog multiband/multimode CMOS receivers may be wideband receivers with either LNA-first or mixer-first RF front-ends. Many of these receivers may rely on passive mixing, often using a squarewave local oscillator (LO) signal with 25-% duty cycle, in other words, 4 phases for better noise and linearity performance. Squarewave mixing is an operation that may lead to folding of undesired signals at odd harmonics of the CLK frequency f_{CLK} on top of the desired signal. Harmonic folding may be a problem in envisioned wideband surface acoustic wave (SAW) filterless systems, where magnitude and spectral content at harmonic frequencies is not filtered out by a pre-selected SAW filter. One solution is to use 8-phase or even 16-phase passive mixing, where the first harmonic to be folded is respectively either the 7th or 15th, instead of the 3rd harmonic as in the 4-phase case. This approach may be challenging at higher input frequencies, because doubling the number of phases also means having to double the undivided input CLK frequency in order to create the needed number of phases through dividers. To some degree, harmonic rejection schemes may also suffer from mismatches in the signal paths and the difficulty of implementing irrational square root based gain coefficients in analog circuits. Operation with 8 or 16 phases may also increase the amount of required hardware.

In addition to analog receivers there exist digital-intensive receivers. Because direct sampling may still be unfeasible at the GHz-range of interest, many architectures of digital-intensive receivers are based on the delta-sigma modulation principle. The idea of this architecture is to embed the RF front-end of a direct conversion receiver as part of a frequency-converting delta-sigma Analog-to-Digital (A/D) converter, so that signal discretization and quantization noise shaping begins already in the RF section. These kinds of receivers may be called direct delta-sigma receivers (DDSR). DDSRs include implementations based on mostly passive loop filters and active loop filters, where the latter attempt to achieve an acceptable noise figure and linearity simultaneously. Mostly passive loop filters may lead to good linearity but poor receiver noise figure due to lower front-end gain.

In the following, several example embodiments of the invention will be described in the context of a wireless CMOS communication receiver structure rejecting magnitude and spectral content at the harmonics of the desired RF signal. The radio-frequency receiver may be used as a stand-alone block or as a part of a wireless receiver system-on-chip (SoC) integrated circuit (IC). The radio-frequency receiver according to the invention may be used in any suitable environment or apparatus where radio-frequency receivers are used. The apparatus may be either a portable or fixed wireless communications apparatus, for example, a mobile phone, a mobile computer, a mobile collaboration device, a mobile internet device, a smart phone, a tablet computer, a tablet personal computer (PC), a personal digital assistant, a handheld game console, a portable media player, a digital still camera (DSC), a digital video camera (DVC or digital camcorder), a pager, a portable medical device, a personal navigation device (PND), a router, a base station, a medical device, a repeater, a test equipment, a printer, a desktop personal computer or any other device suitable for receiving radio frequency signals.

An apparatus according to an example embodiment may be any device containing required electronics and circuitry for performing the method according to the embodiments. The method may be implemented as an additional function for the apparatus. It should be understood, however, that the apparatus hereinafter described is merely illustrative of one type of apparatus that may benefit from various embodiments, and therefore should not be taken to limit the scope of the embodiments. As such, it should be appreciated that at least some of the components described below in connection with the apparatus may be optional and thus, in an example embodiment may include more, less or different components than described.

The apparatus may comprise a memory, at least one processor, and computer program code residing in the memory. The apparatus further comprises an antenna for receiving radio frequency signals. The apparatus may also comprise an interface means, for example, a user interface, which allows a user to interact with the apparatus. The user interface means may be implemented by using one or more of the following: the display, a touch screen, a keypad, or other structures. The apparatus may further be configured to connect to another device, for example, by a communication means. Communication means may be a communication block configured to receive and/or transmit information. A radiating structure of the antenna may be one or a combination of a dipole, a loop, a planar inverted-F antenna, a planar inverted-L antenna, a monopole, an inverted-F antenna. The antenna may be connected to a wireless communications apparatus.

Instead of a traditional structure, example embodiments of the invention disclose a direct delta-sigma receiver (DDSR) architecture based on an active loop filter and using a 6-phase clock signal (CLK) provided by a 6-phase clock signal generator and rejecting magnitude and spectral content at the third harmonic of the desired RF signal. The clock signal generator may be, for example, a Local Oscillator (LO), a Voltage Controlled Oscillator (VCO), a Phase-Locked Loop (PLL), or any other circuit suitable for generating clock signals. The direct delta-sigma receiver is a digital-intensive receiver architecture with an LNA-first front-end. The front-end is embedded as part of a delta-sigma modulator (DSM), which functions as an analog-to-digital converter (ADC), and thus the complete architecture realizes RF-to-digital conversion. The architecture of a DDSR using a 6-phase clock signal comprises a signal path that is divided to 3 parallel signal paths each using different phases of the 6-phase clock signal. The harmonic rejection is achieved by summing the digital output signals of 3 parallel signal paths that are baseband signal paths after downconversion and quantization, using integer-ratio gain coefficients. Coefficients are predetermined factors depending on clock signal phases and calibrations. This approach produces a harmonic-reject DDSR with the capability to reject magnitude and spectral content at the 3rd harmonic of the desired input RF signal. When a 6-phase clock signal is used instead of a 4-phase clock signal folding of undesired signals at odd harmonics of the CLK frequency f_{CLK} on top of the desired signal may be avoided.

Constraining the number of clock signal (CLK) phases to 6 limits the required increase in hardware as compared to the above mentioned 8- or 16-phase case, and the increase in input CLK frequency is limited to 3 x f_{CLK} instead of 4 x f_{CLK} (8-phase) or 8 x f_{CLK} (16-phase). Further, a 6-phase solution may use less power than solutions of 8- or 16-phases. In addition to this, recent DDSRs do not disclose harmonic-rejection capability at all. In other words, harmonic rejection has not been previously proposed for any of the delta-sigma-based receiver structures or architectures.

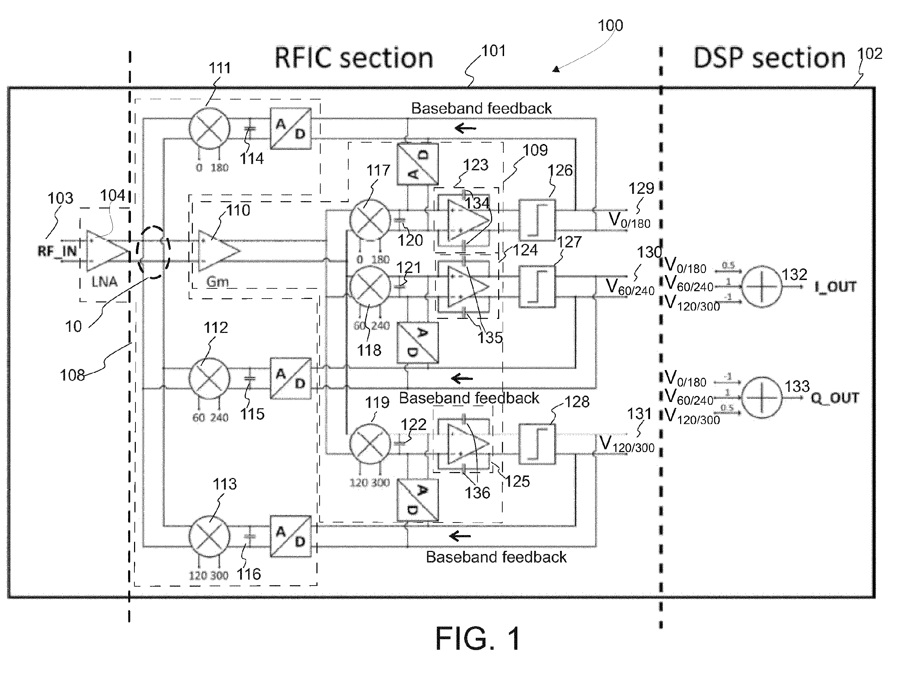

An example embodiment of the present invention and its potential advantages are understood by referring to figures 1 through 7.

Figure 1 shows an example of a diagram, a circuitry, of a direct delta-sigma receiver (DDSR) according to an example embodiment of the invention. The DDSR 100 is divided into a delta-sigma-based radio-frequency integrated circuit (RFIC) section 101 and a digital signal processing (DSP) section 102. Both sections 101, 102 may be located on the same integrated circuit (IC). Basically, the RFIC section 101 simultaneously amplifies, downconverts, and analog-to-digital (A/D) converts an input RF signal while attenuating out-of-band blocking signals and the DSP section 102 performs harmonic rejection by combining the digital output signals of the three parallel signal paths 129, 130, 131 into a digital I/Q receiver output signal I_OUT 132 and Q_OUT 133.

The input signal of the RFIC section 101 may be any suitable received RF signal. The input of the RFIC section 101 may have high impedance which means that the impedance at the input node 10 of the RFIC section 101 and the DDSR 100 may preferably be at least 200 Ω, for example, 300 Ω to 500 Ω or even more. The input signal may be an output signal of a low noise amplifier (LNA) 104 (as in fig. 1) or some other suitable structure, for example, a transformer or any other device with a high impedance output. The LNA 104 is a part of a first integrator stage 108. The input node 10 is loaded by a differential N-path blocking signal filter comprised of passive mixers 111, 112, 113, driven by a 6-phase clock signal (CLK) generator with 16.7% (1/6) duty cycle pulses, and of capacitors 114, 115, 116 on their baseband ports. The switches in the passive mixers may be NMOS or PMOS devices. The phase shift between the clock signals fed to mixers 111, 112, 113 may be equal to 60° which in phases means 0, 60, 120, 180, 240, 300, as opposed to the 4-phase CLK generator with I/Q phases 0, 90, 180, and 270. This filter provides a bandpass response which is a filtered RF signal output at the input node 10 around the CLK frequency f_{CLK}. The N-path blocking signal filter is connected in parallel to the input node 10.

The filtered RF signal of the first integrator stage 108 of the RFIC section 101 is then processed further by the frequency-translating second integrator stage 109, wherein the output of an RF transconductance amplifier (Gm) 110 drives downconversion passive mixers 117, 118, 119 and baseband Miller-connected integrators 123, 124, 125. These mixers 117, 118, 119 are driven by the same 6-phase CLK signal as the N-path filter mixers 111, 112, 113 respectively, and additional capacitors 120, 121, 122 may be connected to the baseband port for filtering blocking signals at high frequency offsets, where the operational amplifier may no longer provide a good virtual ground. Mixers 111 and 117 of the first signal path are driven by the first CLK signal with phases 0 and 180, mixers 112 and 118 of the second signal path are driven by the second CLK signal with phases 60 and 240 and mixers 113 and 119 of the second signal path are driven by the third CLK signal with phases 120 and 300. The downconverted signal currents in the three paths are then integrated by the capacitors of the corresponding Miller integrators 123, 124, 125.

There are now consequently three baseband paths in contrast to the conventional two I/Q paths. The output of the Miller stage comprising Miller-connected integrators 123, 124, 125 may be followed by additional integrator stages, or the signal can be quantized already at this point by quantizers 126, 127, 128, leading to a two-stage DDSR 100 as shown in Figure 1. More stages than two stages 108, 109 may make the design more complex, but it may, however, offer improved input signal filtering and quantization noise shaping; the operating principle of the DDSR 100 remains the same regardless of the number of integrator stages.

The quantized output signals V_{0/180} 129, V_{60/240} 130, and V_{120/300} 131 of the three signal paths are finally combined with gain coefficients by the DSP section 102 into an I/Q output signal, I_OUT 132 and Q_OUT 133. These gain coefficients may be, for example, 0.5, 1, and -1, for signals V_{0/180} 129, V_{60/240} 130, and V_{120/300} 131, respectively. These gain coefficients may also be multiples if the integer ratio and the +/- sign relationships remain, for example, instead of 0.5, 1, and -1, they may be 1, 2, and -2 or 1.5, 3 and -3 etc. When the (possibly calibrated) signal path output signals V_{0/180} 129, V_{60/240} 130, and V_{120/300} 131 and the (possibly calibrated) coefficients are well matched, magnitude and spectral content at the third harmonic of the input RF signal 103 may be cancelled at the output of the DDSR 100. The combiner may be a DSP combiner. The use of this kind of combining enables use of the 6-phase clock signal.

Delta-sigma operation may be achieved by digital-to-analog (D/A) converting and feeding back a scaled version of the digital output V_{0/180} 129, V_{60/240} 130, and V_{120/300} 131 to the individual stages 108, 109. To retain correct operation, the signal is fed back in all three phase-shifted signal paths V_{0/180} 129, V_{60/240} 130, and V_{120/300} 131. The feedback signal current is superpositioned with the forward signal current in the integrating capacitors; the N-path filter capacitors 114, 115, 116 and the Miller integrator capacitors 134, 135, 136, before feeding to mixers 111, 112, 113, 117, 118, 119. V_{0/180} 129 is fed back to mixer 111 and integrator 123, V_{60/240} 130 to mixer 112 and integrator 124 and V_{120/300} 131 to mixer 113 and integrator 125.

In this manner, the RFIC section 101 is embedded as part of the delta-sigma modulator, and consequently signal discretization begins already at the input node 10. Operation of the receiver 100 produces a bandpass response (the signal transfer function, STF) for the desired input signal to the receiver which is provided by the LNA 104 output, or, in other words, a low-pass response at the baseband output. Whereas, the quantization noise is high-pass filtered (the noise transfer function, NTF), so that a significant amount of the noise is removed from the desired signal channel.

However, it is also possible that the DDSR according to an example embodiment comprising three parallel signal paths, may be arranged to be programmable. When the DDSR is programmable a path of the DDSR may be switched off, in other words disabled, and the clock signal may be then programmed to be driven by a 4-phase signal instead of a 6-phase signal. This is the case when all three parallel signal paths of the first integrator stage and the second integrator stage are active. This re-programming may be preferable, when the received RF input signal of the DDSR is a high band frequency signal; its RF frequency is over 1.4GHz. For example, Long Term Evoluation (LTE) frequency band 7 is a high band. A high band is a frequency band which has a minimum frequency of 1.4GHz or greater. Whereas, a low band is a frequency band which has a maximum frequency of 1.4GHz or below; for example, LTE frequency band 5. This is because there is seldom any magnitude and spectral content at the 3rd harmonic of high band frequencies. In the high bands, for example in LTE frequency band 7, the third harmonics are generated at around 8GHz, where there are no operational frequency bands. However, the limit between low band and high-band may be changeable in some circumstances; therefore the limit may locate on greater or lower frequencies than at around 1.4 GHz. The location of the limit may depend, for example, on used technology. In addition, when one of the three paths is switched off due to a high input frequency and the DDSR is driven by the 4-phase clock signal, the clock signal generation may be less complex. However, the third path may be switched on again, when an input signal with a lower frequency band is used. In addition, a 4-phase DDSR with two active paths may be programmed to a 6-phase DDSR when a third path of of the first integrator stage and the second integrator stage of the DDSR are switched on, in other words enabled. This is the case when two parallel signal paths of the first integrator stage and the second integrator stage are active and one of the paths of the first integrator stage and the second integrator stage is inactive.

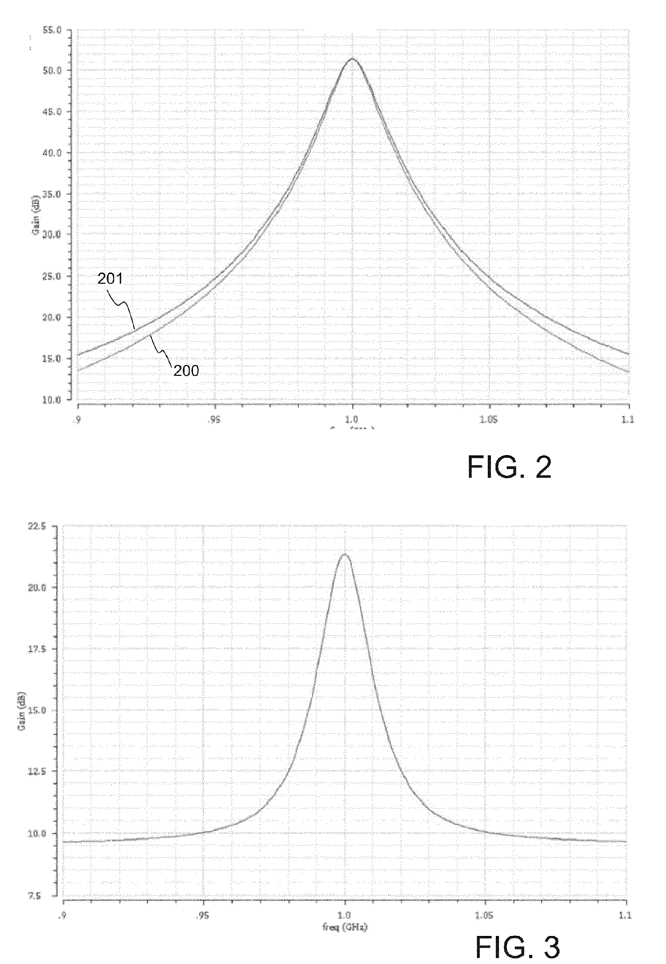

Figure 2 shows an example of the signal transfer function (STF) response of a 6-phase harmonic-reject DDSR 201 according to an example embodiment and the STF response of a 4-phase prior art DDSR 200. In this example, DDSRs with f_{CLK} = 1 GHz have been simulated using a continuous-time approximation. A bandpass response around f_{CLK} (a low-pass response at baseband) is obtained, with an in-band gain of 51 dB and a single-side -3dB bandwidth of about 6 MHz.

Figure 3 shows an intermediate voltage gain response at the LNA 104 output node according to an example embodiment of the invention. Figure 3 shows that the 6-phase N-path filter attenuates out-of-channel blocking signals. The attenuation floor is limited by the series on-resistance of the switches in the passive mixers 111, 112, and 113. The switches may be implemented as NMOS or PMOS transistors. In this embodiment f_{CLK} = 1 GHz.

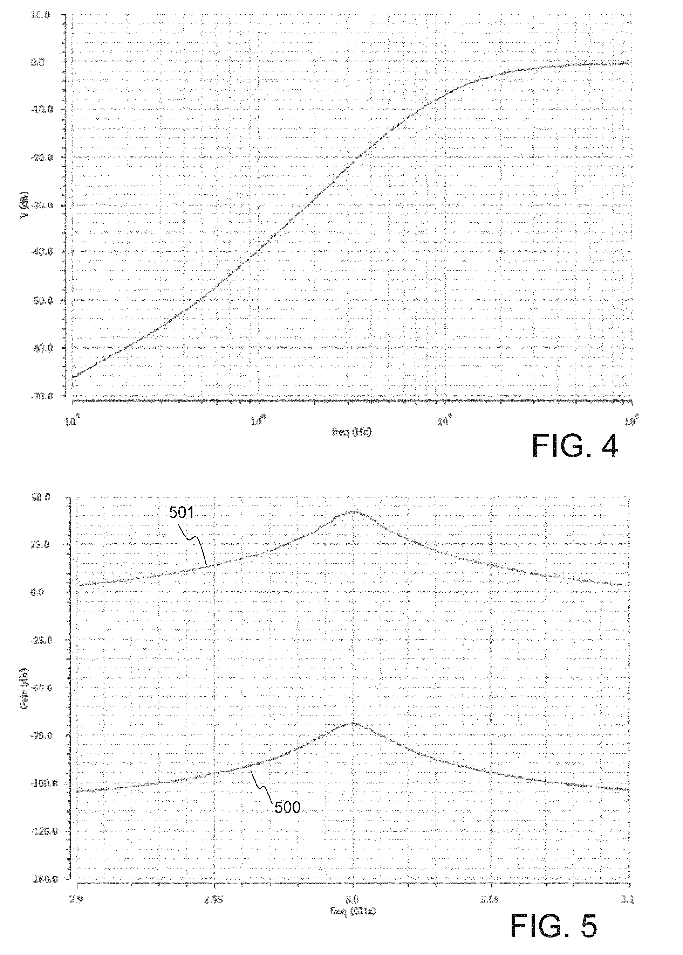

Figure 4 illustrates a continuous-time approximation of a noise transfer function of the 6-phase direct delta-sigma receiver according to an example embodiment of the invention. The quantization noise is high-pass filtered, so that a significant proportion of the quantization noise is removed from the signal band. A steeper slope may be achieved by adding more integrator stages after the second integrator stage 109.

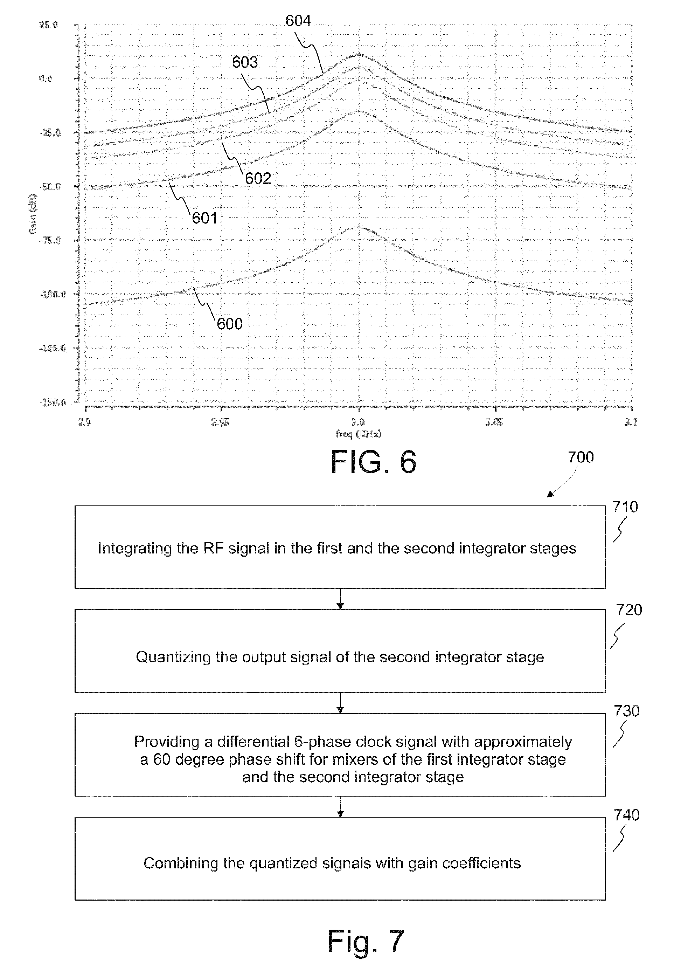

An example of the harmonic rejection property of a 6-phase direct delta-sigma receiver according to an example embodiment of the invention is illustrated in figures 5 and 6.

Figure 5 shows a signal transfer function (STF) response of the 6-phase DDSR 500 according to an example embodiment of the invention and an STF response of the 4-phase DDSR 501, for signal magnitude and spectral content around the third harmonic of f_{CLK} = 1.0 GHz. At the receiver output this content has been folded on top of the desired RF input signal at f_{LO}. It is thus indistinguishable from the desired RF input signal after the squarewave passive mixing operation.

The peak gain of this content in the 4-phase DDSR is around 40 dB, when the gain at f_{CLK} is about 51 dB (shown in context with figure 2); therefore the rejection of the third harmonic of the 4-phase DDSR is 11 dB. Whereas, the peak gain for the harmonic content in the example 6-phase harmonic-reject DDSR is -70 dB, which demonstrates the intended harmonic rejection capability with a rejection of about 121 dB.

Unavoidable mismatches in the signal paths and inexactness in the signal path combination gain coefficients may lead to limited harmonic rejection in implementations of harmonic rejection principles. Figure 6 shows a STF response around the third harmonic of f_{CLK} of the 6-phase DDSR according to an embodiment of the invention for different values of the mismatch in the harmonic recombination coefficients.

Thus, figure 6 illustrates the effect of gain coefficient mismatch on the achievable harmonic rejection. There is shown responses for 0% mismatch value 600, 0.1% mismatch value 601, 0.5% mismatch value 602, 1% mismatch value 603, and 2% mismatch value 604. It should be noted, that even the 2% mismatch leads to a harmonic rejection of 41 dB (51 dB - 10 dB), which is still 30 dB bigger than the prior art 4-phase DDSR (shown in figure 5). It should also be kept in mind that the 6-phase DDSR according to the invention leverages the use of integer-ratio DSP gain coefficients, where the use of integer ratios leads to lower mismatches. Furthermore, known calibration techniques for 8-phase and 16-phase analog receivers can thus most likely be used to achieve even greater harmonic rejection improvements than in those analog receivers.

Figure 7 depicts a flow chart of a method 700 according to an embodiment for filtering an RF signal using a direct delta-sigma receiver, comprising a first integrator stage and a second integrator stage, wherein a signal path of the first integrator stage and the second integrator stage are divided to three signal paths and wherein a quantizer is arranged at each output signal path of the second integrator stage, the method comprising:

In the method 700, in block 710 RF signal is integrated in the first and the second integrator stages;

In block 720, the output signal of the second integrator stage is quantized, and in block 730, a differential 6-phase clock signal with approximately a 60 degree phase shift is provided for mixers of the first integrator stage and the second integrator stage. Mixers of a first signal path of the first integrator stage and the second integrator stage use the same clock signal phase being different than clock signal phase used by mixers of other signal paths. The 6-phase clock signal with approximately a 60 degree phase shift may be provided by producing it with a signal generator.

In block 740, the quantized signals are combined with predetermined gain coefficients by a combiner for providing the digital output signal of the direct delta-sigma receiver. The blocks illustrated in Figure 7 may represent steps in a method. The illustration of a particular order to the blocks does not necessarily imply that there is a required or preferred order for the blocks and the order and arrangement of the blocks may be varied. Furthermore, it may be possible for some block or blocks to be omitted.

The 6-phase DDSR according to embodiments of the invention comprises a digital-intensive receiver architecture based on delta-sigma modulation and 6-phase CLK operation, with an analog RF signal input and digital I/Q bit stream output. This architecture improves the recent receivers, for example, 4-phase DDSRs, particularly through harmonic rejection ability, as offered by the 6-phase CLK operation. Harmonic rejection is especially important in delta-sigma based receivers that have intrinsically wideband inputs. However, the invention also improves upon the prior art 6-phase harmonic-reject solution for fully analog receivers, both by using the intrinsically available digital signals and robust integer-ratio-based summation instead of relying on irrational ratios.

Embodiments of the invention as described above may be implemented as a stand-alone block, a module, a single integrated circuit (IC) chip, a single board, a multichip module, a circuit board or as part of a wireless receiver system-on-chip (SoC) IC. The IC chip may, for example, be an analog IC, an RF IC (RFIC), a mixed-signal IC or an application specific integrated circuit (ASIC). Furthermore, any or all sub-parts of the receiver may be implemented separately either as a module or an IC or as discrete components. As software, selected tasks of programming according to example embodiments may be implemented as a plurality of software instructions being executed by a computing device using any suitable operating system. Embodiments of the invention may also be implemented as a part of any apparatus comprising a circuitry in which radio frequency signals are transmitted and received. Thus, for example, embodiments of the invention may be implemented in a mobile phone, in a base station, in a computer such as a desktop computer or a tablet computer comprising radio frequency communication means (for example a wireless local area network, cellular radio, etc.).

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is a highly automated process. Complex and powerful software tools are available for converting a logic level design into a semiconductor circuit design ready to be etched and formed on a semiconductor substrate. Programs may automatically route conductors and locate components on a semiconductor chip using well established rules of design as well as libraries of pre stored design modules. Once the design for a semiconductor circuit has been completed, the resulting design, in a standardized electronic format may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

## Claims

1. An apparatus comprising:
a forward signal path comprising a first integrator stage and a second integrator stage, wherein a signal path of the first integrator stage and a signal path of the second integrator stage are each divided into three signal paths,
and wherein each signal path of the first integrator stage comprises an N-path filter mixer, wherein inputs of the N-path filter mixer and an RF transconductance amplifier (Gm) of the second integrator stage are connected to an RF signal input, and wherein each signal path of the second integrator stage comprises a downconversion mixer connected to the output of the RF transconductance amplifier (Gm), at least one baseband amplifier stage connected to the output of the downconversion mixer, and a quantizer connected to the output of said at least one baseband amplifier stage, and
wherein the downconversion mixer is arranged to downconvert an RF signal to a baseband signal and the quantizer is arranged to produce a digital version of the forward signal path output.

2. An apparatus according to claim 1, wherein the apparatus further comprises a feedback signal path comprising three signal paths each comprising a first digital-to-analog converter connected between the forward signal path output and the first integrator stage providing an upconverted signal to the RF signal input, and a second digital-to-analog converter connected between the forward signal path output and the baseband amplifier stage.

3. An apparatus according to any preceding claim, wherein the apparatus further comprises a signal generator configured to produce a differential clock signal comprising a first clock signal, a second clock signal and a third clock signal, wherein each clock signal of the produced differential clock signal comprise different phases when compared to other clock signals of the produced differential clock signal, and wherein mixers of a first signal path of the first integrator stage and the second integrator stage use phases of the first clock signal, mixers of a second signal path of the first integrator stage and the second integrator stage use phases of the second clock signal, and mixers of a third signal path of the first integrator stage and the second integrator stage use phases of the third clock signal.

4. An apparatus according to claim 3, wherein the produced differential clock signal is a differential 6-phase clock signal with a substantially 60 degree phase shift.

5. An apparatus according to claim 3 or 4, wherein the first clock signal comprises phases 0 and 180 degrees of the produced differential clock signal, the second clock signal comprises phases 60 and 240 degrees of the produced differential clock signal and the third clock signal comprises phases 120 and 300 degrees of the produced differential clock signal.

6. An apparatus according to any of the claims 1 to 5, wherein the apparatus further comprises a combiner configured to combine the quantized low-pass signals with gain coefficients.

7. An apparatus according to claim 6, wherein the apparatus is programmable, and wherein one signal path of the first integrator stage and the second integrator stage is configured to be switched off, when three signal paths of the first integrator stage and the second integrator stage are active, or on, when two signal paths of the first integrator stage and the second integrator stage are active.

8. An apparatus according to any of the claims 1 to 7, wherein an RF signal input node of the apparatus is provided by an LNA.

9. An apparatus according to any of the claims 1 to 8, wherein the apparatus further comprises an antenna for receiving radio frequency signals.

10. An apparatus according to any of the claims 1 to 9, wherein the apparatus is a wireless communication apparatus.

11. A method of filtering a RF signal using a direct delta-sigma receiver, wherein the method comprises a first integrator stage and a second integrator stage, wherein a signal path of the first integrator stage and a signal path of the second integrator stage are each divided into three signal paths and wherein a quantizer is arranged at each output signal path of the second integrator stage, the method comprising:
integrating the RF signal in the first and the second integrator stages;
quantizing the output signal of the second integrator stage; and
providing a differential 6-phase clock signal with a substantially 60 degree phase shift for mixers of the first integrator stage and the second integrator stage.

12. A method of filtering an RF signal using a direct deltasigma receiver according to claim 11, wherein the method further comprises:
combining the quantized signals with gain coefficients by a combiner for providing the digital output signal of the direct delta-sigma receiver.

13. A method of filtering an RF signal using a direct delta-sigma receiver according to claim 11 or 12, wherein the method further comprises:
digital-to-analog converting quantized signals before providing the digital-to-analog converted signals to the first and second integrator stages.

14. A method of filtering an RF signal using a direct delta-sigma receiver according to any of the claims 11 to 13, wherein mixers of the first signal path of the first integrator stage and the second integrator stage use a first clock signal comprising phases 0 and 180 degrees of the produced differential clock signal, mixers of the second signal path of the first integrator stage and the second integrator stage use a second clock signal comprising phases 60 and 240 and mixers of the third signal path of the first integrator stage and the second integrator stage use a third clock signal comprising phases 120 and 300 degrees of the produced differential clock signal.

15. A method of filtering a RF signal using a direct delta-sigma receiver according to any of the claims 11 to 14, wherein the method further comprises:
driving the RF signal input node of the apparatus by an LNA.
